(19)

Europäisches Patentamt

European Patent Office

Office européen des brevets

(11) **EP 4 395 397 A1**

(12) **EUROPEAN PATENT APPLICATION**

(43) Date of publication:
**03.07.2024 Bulletin 2024/27**

(51) International Patent Classification (IPC):
**H04W 16/18** $^{(2009.01)}$

(21) Application number: **22307064.0**

(52) Cooperative Patent Classification (CPC):
**H04W 16/18**

(22) Date of filing: **29.12.2022**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Université Gustave Eiffel**
  **77420 Champs-Sur-Marne (FR)**
- **uGetWin**
  **75002 Paris (FR)**
- **Université Paris-Est Créteil Val de Marne**
  **94000 Créteil (FR)**
- **Ecole Nationale des Ponts et Chaussées**
  **77420 Champs-sur-Marne (FR)**

- **Centre National de la Recherche Scientifique**
  **75016 Paris (FR)**

(72) Inventors:
- **CHAMBON, Aurélien**
  **77174 Villeneuve-le-comte (FR)**
- **RACHEDI, Abderrezak**
  **77100 Meaux (FR)**
- **SAHLI, Abderrahim**
  **77200 Torcy (FR)**
- **MEBARKI, Ahmed**
  **77420 Champs sur Marne (FR)**

(74) Representative: **A.P.I. Conseil**
**Immeuble Newton**
**4, rue Jules Ferry**
**64000 Pau (FR)**

(54) **METHOD FOR GENERATING A DEPLOYMENT WEIGHTED MULTIGRAPH OF CONNECTED OBJECTS AND METHOD FOR GENERATING OPTIMIZED DEPLOYMENT SOLUTIONS OF CONNECTED OBJECTS THEREOF**

(57)     The invention relates to a method (100) for generating at least one deployment weighted multigraph of connected objects comprises an image processing including a step of loading (110) at least one plan, a step of transforming (120) the plan into a grid, a step of filtering (130) the grid to generate a binary grid, a step of skeletonizing (140) the binary grid, a step of filtering (170) the skeletonized binary grids of the binary grid and a step of calculating (190) and a step of generating (195) a deployment weighted multigraph.

The invention also relates to a method (200) for generating an initial population of deployment grids $(P_n, P_{n+1})$ of connected objects and to a method for generating (1000) a population of optimized deployment solutions of connected objects

FIG. 1

**Description**

**Field of the invention**

The present invention relates to the field of Internet of Things (IoT). In particular, the invention relates to the field of deployment optimization of connected objects in a predetermined area.

This invention provides computer-implemented method for generating a deployment weighted multigraph of connected objects, a method for generating an initial population of deployment weighted multigraphs of connected objects from the deployment weighted multigraph according to the invention and a method for generating a population of optimized deployment solutions of connected objects from the initial population generated by the method according to the invention.

**Description of Related Art**

Below, we describe the known prior art from which the invention has been developed.

Internet Of Things (IoT) networks deployments have been a major research interest for the past few years. The wide variety of communication technologies available allows the collection and analysis of data of many types. However, the deployment of these networks must ensure wide coverage while allowing IoT devices to communicate with each other. This implies many connected objects and therefore a high cost. Thus, providing a deployment that maximizes the coverage, complies with some technical constraints, such as the connectivity, while minimizing the number of devices deployed, is a matter of great concern. Several methods have been proposed in the literature depending on the context considered: in free space, considering homogeneous obstacles or taking into account the connectivity of the network. In all these scenarios, the main methods used are genetic algorithms or computational geometry. These have been extended to tackle the same problem but considering obstacles in the environment. On the one hand, geometric methods have been introduced relaying on Voronoi diagrams (K. Eledlebi et al.,"Voronoi-based indoor deployment of mobile sensors network with obstacles," in 2018 IEEE 3rd International Workshops on Foundations and Applications of Self* Systems), virtual forces (Y. Zou and al., "Sensor deployment and target localization based on virtual forces," in IEEE INFOCOM 2003. Twenty-second Annual Joint Conference of the IEEE Computer and Communications), or triangular tessellation (I. Khoufi et al. "A Simple Method for the Deployment of Wireless Sensors to Ensure Full Coverage of an Irregular Area with Obstacles," in MSWIM: International Conference on Modeling, Analysis and Simulation of Wireless and Mobile Systems, (Montreal, Canada), Sept. 2014).

On the other hand, evolutionary algorithms such as the Non dominated Sorting Genetic Algorithm II (NSGA-II) have been presented to generate optimized WSN deployment (H. Zhou et al., "Indoor positioning research based on wireless sensor network topology optimization," in 2019 Chinese Automation Congress, pp. 3951-3957, 2019).

Although the methods presented in the prior art make it possible to generate optimized deployment solutions for connected objects in a given environment, their implementations within the framework of large and complex environments, that is to say which have different areas or rooms separated by walls, generally involves a very long processing time without achieving satisfactory deployment optimizations.

Hence, there is a need for solutions capable of generating better optimized deployments of connected objects in a predetermined time no matter how complex the environment is and no matter the heterogeneity of the connected objects.

**Summary of the invention**

The following sets forth a simplified summary of selected aspects, embodiments and examples of the present invention for the purpose of providing a basic understanding of the invention. However, the summary does not constitute an extensive overview of all the aspects, embodiments and examples of the invention. The sole purpose of the summary is to present selected aspects, embodiments and examples of the invention in a concise form as an introduction to the more detailed description of the aspects, embodiments and examples of the invention that follow the summary.

The invention aims to overcome the disadvantages of the prior art. In particular, the invention proposes a computer-implemented method for generating at least one deployment weighted multigraph of connected objects from at least one plan delineating one or more zone(s) comprising free spaces and physical obstacles, such as walls or doors, with semantic data related to the one or more zone(s), the plan being extracted from a BIM file or a semantic image of normalized plane, the computer-implemented method comprising an image processing with the following steps:

> ∘ loading at least one plan delineating one or more zone(s) including free spaces and physical obstacles, such as walls or doors with semantic data related to the one or more zone(s),

○ transforming the plan into a grid comprising cells related to the one or more zone(s), with semantic data,

○ filtering the grid to generate a binary grid comprising binary cells related to the one or more zone(s),

○ skeletonizing, based on the free spaces and the physical obstacles of the one or more zone(s), the binary grid to generate a skeleton of the binary grid, the skeletonized binary grid comprising deployment binary cells, the deployment binary cells being generated from the binary cells of the free spaces,

○ filtering the skeletonized binary grid to select, according to a predefined condition, a part of the deployment binary cells,

○ calculating the distance between each of the selected deployment binary cells, and

○ generating a deployment weighted multigraph of the one more zone(s) comprising the selected deployment binary cells and weighted links, each selected deployment binary cells being representative of a connected object, and each weighted link relative to a first selected deployment binary cell being representative of the calculated distance between the first selected deployment binary cell to a second selected deployment binary cell.

According to other optional features of the method according to the invention, it can optionally include one or more of the following characteristics alone or in combination:

- the predefined condition of the step of filtering the skeletonized binary grid comprises selecting deployment binary cells related to endpoints and intersection points of the skeletonized binary grid, and among the selected deployment binary cells, removing the selected deployment binary cells located at distance inferior to:

  a. a predefined distance from a binary cell related to a physical obstacle, and

  b. a predefined distance between a selected deployment binary cell relative to another deployment binary cell.

- the step of skeletonizing comprises a generation, from the binary grid, of medial axes of the one or more zone(s), the medial axes comprising the deployment binary cells positioned at equal distance from a binary cell related to a physical obstacle.

- It comprises a step of determining one or more optimized zone(s), from the one or more zone(s), by calculating the maximum inscribed rectangle area and, if the ratio of the maximum inscribed rectangle area to the considered one or more zone(s) area is higher than a predefined threshold, then the step of skeletonizing is based on the free spaces and the physical obstacles of the one or more optimized zone(s).

According to **another aspect,** the invention can also relate to a computer-implemented method for generating an initial population of deployment grids of connected objects, the computer-implemented method comprising the following steps:

○ loading, from the deployment weighted multigraph generated by the method for generating at least one deployment weighted multigraph according to the invention, a first deployment grid which comprises the deployment binary cell positions, and removing, by contraction, the deployment binary cells which present a distance with another deployment binary cell equal or inferior to a predefined threshold, to obtain a second deployment grid which comprises less deployment binary cells than the first deployment grid,

○ iterating the step of loading and removing, by contraction, the deployment binary cells and increasing, for each iteration, the predefined threshold until the initial population reaches a predefined number of deployment grids.

The invention can also relate to a computer-implemented method for generating a population of optimized deployment solutions of connected objects, the method comprising the following steps:

○ loading the initial population generated by the method for generating an initial population of deployment grids of connected objects according to the invention and filtering the initial population by keeping the deployment grids of connected objects which fit a predefined technical constraint for obtaining a parent population,
○ applying an evolutionary algorithm from the parent population and generating a population of optimized deployment solutions.

According to other optional features of the method according to the invention, it can optionally include one or more of the following characteristics alone or in combination:

-    the step of applying an evolutionary algorithm further comprises:

    ◦ randomly selecting a deployment grid from the parent population, and generating a child deployment solution, the child deployment solution comprising the selected deployment grid with at least one mutation, the mutation being selected between: a random addition of a connected object in a free space of the one or more zone(s), a random removal of a connected object in a free space of the one or more zone(s) and/or a random displacement of a connected object in a free space of the one or more zone(s),
    ◦ if the child deployment solution fits the technical constraint, then add the child deployment solution to the parent population,
    ◦ randomly selecting another deployment grid from the parent population and iterate the steps of selecting, generating and adding, to obtain a new population which comprises the parent population and the child deployment solutions,
    ◦ ranking all the deployment solutions of the new population based on a score calculated from at least one objective function,
    ◦ reducing the deployment solutions of the new population by keeping the deployment solutions that fit with a predefined condition,
    ◦ applying the evolutionary algorithm on the reduced new population and generating a population of optimized deployment solutions.

-    the score calculation includes a cost function to optimize the number of connected objects.

-    the ranking of all the deployment solutions of the new population is realized by the Pareto limit.

-    the step of generating a child deployment solution with the random addition of a connected object and/or the random displacement of a connected object is implemented on the skeleton of the skeletonized binary grid or on the deployment weighted multigraph.

-    the objective function includes at least: a coverage rate of the binary grid and/or a signal quality.

-    the connected objects present:

    ◦ different types of coverage; and/or

    ◦ different connectivity ranges.

According to **another aspect,** the present invention can also relate to one or more tangible non-transitory computer-readable media storing computer-readable instructions that when executed by one or more processors cause the one or more processors to perform at least one of or all of the method(s) according to the invention.

**Brief description of the drawings**

The foregoing and other objects, features and advantages of the present invention will become more apparent from the following detailed description when taken in conjunction with the accompanying drawings in which:

FIG. 1 is a schematic block diagram of a computer-implemented method for generating at least one deployment weighted multigraph of connected objects according to the present invention.

FIG. 2 is a graphical illustration of a computer-implemented method for generating at least one deployment weighted multigraph of connected objects according to the present invention.

FIG. 3 is a schematic illustration of a first deployment weighted multigraph (3A) and of a second deployment weighted multigraph (3B).

FIG. 4 is a schematic block diagram of a computer-implemented method for generating a population of optimized deployment solutions of connected objects according to the invention.

Fig. 5 is a graphical illustration of a computer-implemented method for generating a population of optimized deployment solutions of connected objects according to the invention.

Fig. 6 represents diagrams showing the comparison, at different times (6A, 6B), of deployment solutions of connected objects, in a medium size area, generated by the method according to the invention and by a state-of-the-art method.

Fig. 7 represents diagrams showing the comparison, at different times (7A, 7B, 7C) of deployment solutions of connected objects, in a large size area, generated by the method according to the invention and by a state-of-the-art method.

Several aspects of the present invention are disclosed with reference to flow diagrams and/or block diagrams of methods, devices and computer program products according to embodiments of the invention.

On the figures, the flow diagrams and/or block diagrams show the architecture, the functionality and possible implementation of devices or systems or methods and computer program products, according to several embodiments of the invention.

For this purpose, each box in the flow diagrams or block diagrams may represent a system, a device, a module or code which comprises several executable instructions for implementing the specified logical function(s).

In some implementations, the functions associated with the box may appear in a different order than indicated in the drawings.

For example, two boxes successively shown, may be executed substantially simultaneously, or boxes may sometimes be executed in the reverse order, depending on the functionality involved.

Each box of flow diagrams or block diagrams and combinations of boxes in flow diagrams or block diagrams may be implemented by special systems that perform the specified functions or actions or perform combinations of special equipment and computer instructions.

**Detailed description**

A description of example embodiments of the invention follows.

Below, we describe a summary of the invention and the associated vocabulary, before presenting the drawbacks of the prior art, then finally showing in more detail how the invention overcomes them.

In the following description, **"deployment weighted multigraph of connected objects"** means that a connected object can have several links with another connected object, representing several different paths. It may also represent a simplified structure of the navigable spaces of the related environment. It may represent the paths taken by users which are generally relevant areas for the deployment of connected objects for various applications.

By "process", "compute", "calculate", "determine", "select", "extract", "compare" or more broadly "executable operation" is meant, within the meaning of the invention, an action performed by a computing device or a processor unless the context indicates otherwise. In this regard, the operations relate to actions and/or processes of a data processing system, for example a computing system or an electronic computing device, which manipulates and transforms the data represented as physical (electronic) quantities in the memories of the computing system or other devices for storing, transmitting or displaying information. In particular, calculation operations are carried out by the processor of the device, the produced data are entered in a corresponding field in a data memory and this field, or these fields can be returned to a user for example through a Human Machine Interface formatting such data. These operations may be based on applications or software.

The terms or expressions **"application"**, **"software"**, **"program code"**, and **"executable code"** mean any expression, code or notation, of a set of instructions intended to cause a data processing to perform a particular function directly or indirectly (for example after a conversion operation into another code). Exemplary program codes may include, but are not limited to, a subprogram, a function, an executable application, a source code, an object code, a library and/or any other sequence of instructions designed for being performed on a computing system.

By **"processor"** is meant, within the meaning of the invention, at least one hardware circuit configured to perform operations according to instructions contained in a code. The hardware circuit may be an integrated circuit. Examples of a processor include, but are not limited to, a central processing unit, a graphics processor, an application-specific integrated circuit ("ASIC" according to Anglo-Saxon terminology), and a programmable logic circuit. A single processor or several other units may be used to implement the invention.

The expression **"human-machine interface"**, within the meaning of the invention, corresponds to any element allowing a human being to communicate with a computer, in particular and without that list being exhaustive, a keyboard and means allowing in response to the commands entered on the keyboard to perform displays and optionally to select with the mouse or a touchpad item displayed on the screen. Another embodiment is a touch screen for selecting directly on the screen the elements touched by the finger or an object and optionally with the possibility of displaying a virtual keyboard.

By "**connected object**", it should be understood any device comprising a processing unit or a processor, for example in the form of a microcontroller cooperating with a data memory, possibly a program memory, said memories possibly being dissociated. The processing unit cooperates with said memories by means of internal communication bus.

By "**BIM file**" is meant an IFC file format that contains a model or a plan that contains information about a building, such as the size of the rooms, the position of the obstacles or the composition of the walls. The IFC format (Industry Foundation Classes) is an object-oriented file format designed to ensure interoperability between different digital mock-up software. By "**semantic image**" is meant a semantic image of normalized planes, for example a SVG (Scalable Vector Graphics) format file. The semantic image can contain the composition of the walls and the scale in its semantics.

According to a **first aspect**, the invention relates to a computer-implemented method 100 for generating at least one deployment weighted multigraph of connected objects.

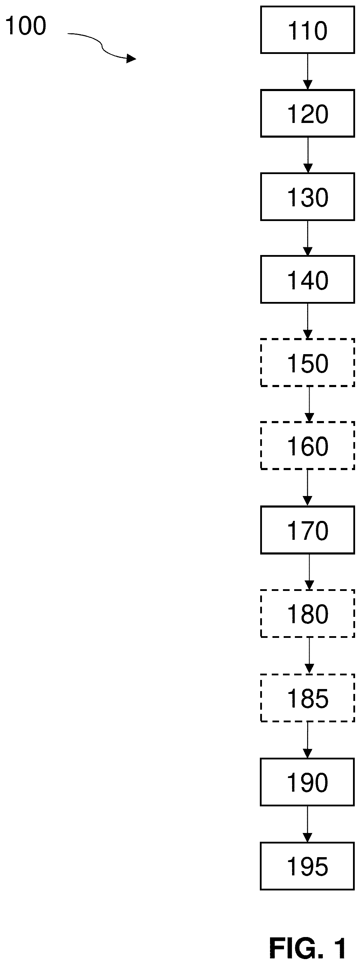

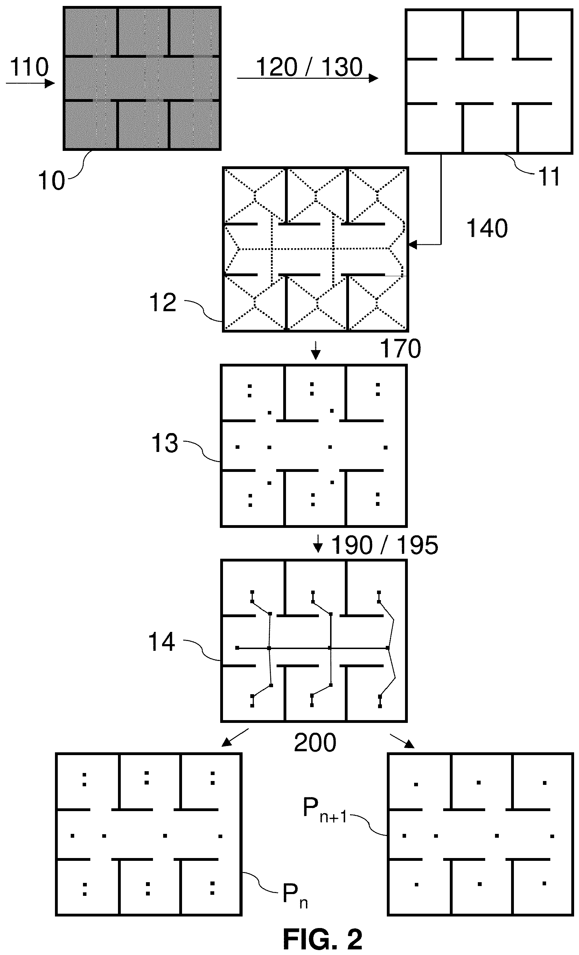

In particular, as illustrated in figures 1 and 2, the method 100 for generating at least one deployment weighted multigraph of connected objects according to the invention comprises an image processing including a step of loading 110 at least one plan, a step of transforming 120 the plan into a grid, a step of filtering 130 the grid to generate a binary grid, a step of skeletonizing 140 the binary grid, a step of filtering 170 the skeletonized binary grid and a step of calculating 190 and a step of generating 195 a deployment weighted multigraph.

The computer-implemented method 100 for generating at least one deployment weighted multigraph of connected objects comprises a step of loading 110 at least one plan delineating one or more zone(s) including free spaces and physical obstacles.

The physical obstacles may be characterized by walls or doors while the free spaces may be characterized by an empty space or more generally by a space which does not comprise any physical obstacle.

To provide such information, the plan can be a BIM file or a semantic image. Advantageously, the plan may comprise semantic data related to the one or more zone(s). The semantic data may include for example a radio penetration ratio, an acoustic range and attenuation, and/or a transparency index. The semantic data may be relative to physical obstacles, more particularly the semantic data may characterize the different obstacles that may comprise the loaded plan.

The computer-implemented method 100 for generating at least one deployment weighted multigraph of connected objects comprises a step of transforming 120 the plan into a grid 10 comprising cells related to the one or more zone(s).

By way of an illustrative example, it may be considered a grid environment $G \subset \mathbb{R}^{m \times n}$ composed of m x n cells such that $g_{i,j}$ is the value of the cell of position (i, j). If $g_{i,j}$ is a physical obstacle cell, such as a wall, its value is the negative of the penetration loss per meter of the wall type, extracted from the file or for example for a BIM database if the plan is a BIM file. Otherwise, $g_{i,j}$= 0, representing a free space to cover.

In another non-limitative example, if the file is a semantic image having no information on the composition of the walls or an incomplete BIM database, it may be set $g_{i,j}$ = -∞ which implies that the physical obstacle is completely insulating.

Once the plan has been transformed, the computer-implemented method 100 for generating at least one deployment weighted multigraph of connected objects comprises filtering the grid to generate a binary grid comprising binary cells related to the one or more zone(s).

By way of example only, the step of filtering 130 may perform a removal of some of the physical obstacles, such as doors, then a threshold function can be applied to the grid to make it a binary grid representation, the threshold function may be defined by the following equation : $\forall b_{i,j} \in B$ , $b_{i,j} = 1$ if $g_{i,j} < 0$ , or $b_{i,j} = 0$ otherwise. More generally, cells related to a physical obstacle may take the value "1" and cells related to a free zone may take the value "0" or vice versa.

The computer-implemented method for generating at least one deployment weighted multigraph of connected objects according to the invention comprises a step of skeletonizing 140, based on the free spaces and the physical obstacles of the one or more zone(s), the binary grid to generate a skeleton of the plan, the skeletonized binary grid 12 comprising deployment binary cells, the deployment binary cells being generated from the binary cells of the free spaces.

The step of skeletonizing 140 may be carried out by any known method, from the skilled person, to generate a skeleton of the one or more zone(s).

More particularly, the step of skeletonizing 140 may comprise a generation 150, from the binary grid 11, of medial axes of the one or more zone(s), the medial axes comprising the deployment binary cells positioned at equal distance from a binary cell related to a physical obstacle.

In an embodiment of the method 100 for generating at least one deployment weighted multigraph 14 of connected objects, it may comprise, prior to the step of skeletonizing 140, a step of determining 160 one or more optimized zone(s), from the one or more zone(s), by calculating the maximum inscribed rectangle area, for example through the gradient descent method, and, if the ratio of the maximum inscribed rectangle area to the considered one or more zone(s) area is higher than a predefined threshold, then the step of skeletonizing is based on the free spaces and the physical obstacles of the one or more optimized zone(s). This determination allows to limit the area of one or more zone(s) so that the skeleton is also limited to the most relevant area of each zone. Since, connected objects will be positioned on the deployment binary cells, limiting their positioning to a specific zone will provide deployment solutions faster.

The method 100 for generating at least one deployment weighted multigraph of connected objects further comprises a step of filtering 170 the skeletonized binary grid 12 to select, according to a predefined condition, a part of the deployment binary cells. Thus, a filtered skeletonized binary grid 13 is generated and comprise only the deployment binary cells that fit the predefined condition.

To that end, a filter may traverse the image with a predefined window size to keep only the endpoints and the intersection points of the latter. For example, a binary cell $b_{i,j}$ may be set to 0 if one of these predefined conditions is true: $\Psi(b_{i,j}) = 3$ ; or $\Psi(b_{i,j}) = 5$ and $\Phi(bi,j) > 1$; or $\Psi(b_{i,j}) \neq 5$ and $\Phi(b_{i,j}) > 0$

Where, $\Psi(b_{i,j}) = \Sigma_{-1 \leq k, l \leq 1} \, b_{i+k,j+l}$ is the sum of the window values and $\Phi(b_{i,j})$ is the number of 1-1 patterns around $b_{i,j}$ clockwise.

More particularly, as an alternative or in addition, the predefined condition of the step of filtering 170 the skeletonized binary grid 12 may further comprise selecting deployment binary cells related to endpoints and intersection points of the skeleton, and among the selected deployment binary cells, removing 185 the selected deployment binary cells located at distance inferior to:

- a predefined distance from a binary cell related to a physical obstacle, and

- a predefined distance between a selected deployment binary cell relative to another deployment binary cell.

The method 100 for generating at least one deployment weighted multigraph 14 of connected objects further comprises a step of calculating 190 the distance between each of the selected deployment binary cells. More particularly, in a preferred embodiment, the distance may be calculated by determining the number of cells, of known dimensions, separating the selected deployment binary cells, and more preferably separating two neighboring deployment binary cells.

According to the invention, the method 100 for generating at least one deployment weighted multigraph 14 of connected objects further comprises a step of generating 195 a deployment weighted multigraph 14 of the one more zone(s) comprising the selected deployment binary cells and weighted links.

The selected deployment binary cells are representative of a connected object, and each weighted link relative to a first selected deployment binary cell is representative of the calculated distance between the first selected deployment binary cell to a second selected deployment binary cell.

According to a second aspect, the invention relates to a computer-implemented method 200 for generating an initial population of deployment grids of connected objects.

As described in line with figure 2, the method 200 for generating an initial population of deployment grids of connected objects $P_n$, $P_{n+1}$ comprises a step of loading, a step of removing and a step of iterating the first two steps.

More particularly, the step of loading is configured to load, from a deployment weighted multigraph 14 generated by the method 100 according to the invention, a first deployment grid. The first deployment grid comprises at least the deployment binary cell positions in the weighted multigraph and optionally the weight relative to a link with another deployment binary cell.

The method 200 for generating an initial population of deployment grids of connected objects comprises a step of removing, from the first deployment grid, the deployment binary cells which presents a distance with another deployment binary cell equal or inferior to a predefined threshold. The deployment binary cells are removed by contraction, meaning that the information relative to a deployment binary cell, for example its position and its weight, are preserved. For example, when two or more deployment binary cells are contracted, the information relative to these deployment binary cells may be aggregated into the remaining deployment binary cell.

For example, the step of removing can be carried out concomitantly or before the step of loading the first deployment grid.

Optionally, the weighted links of the weighted multigraph are contracted according to their weight, any link whose weight is less than the predefined threshold is contracted. More particularly, the weight can be representative of the distance between two deployment binary cells. The distance can be determined by the cells of the grid, of known dimensions, separating one deployment binary cell relative to another deployment binary cell.

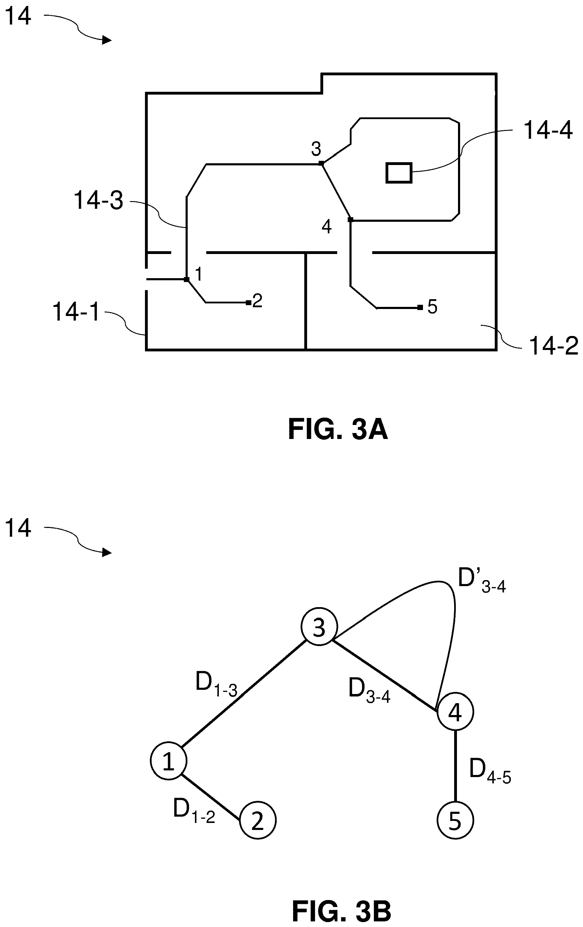

As described previously in line with figure 3A and 3B, a deployment weighted multigraph 14 may comprise physical obstacles 14-1, 14-4 and free zones 14-2, a plurality of weighted links 14-3, describing a plurality of paths $D_{1-2}$, $D_{1-3}$, $D_{3-D4}$, $D'_{3-4}$, $D_{4-5}$, of different lengths from one deployment binary cell 1, 2, 3, 4, 5 to another. As shown in figure 3A, the deployment weighted multigraph 14 may comprise several paths from the deployment binary cell 3 to the deployment binary cell 4. A first path goes straight from the deployment binary cell 3 to the deployment binary cell 4 while another path from the deployment binary cell 3 to the deployment binary cell 4 goes around the physical obstacle 14-4. Depending on which link is contracted, the information related to the weight of a same deployment binary cell can be different.

Then, a second deployment grid is obtained which comprises less deployment binary cells than the first deployment grid.

To provide an initial population of deployment solutions, the method 200 comprises a step of iterating the step of loading and removing, by contraction, the deployment binary cells and increasing, for each iteration, the predefined threshold until the initial population reaches a predefined number of deployment grids $P_n$, $P_{n+1}$.

According to a third aspect, the invention relates to a computer-implemented method 1000 for generating a population of optimized deployment solutions of connected objects. The method comprises a step of loading 1100 an initial population, filtering 1200 the initial population and applying 1300 an evolutionary algorithm.

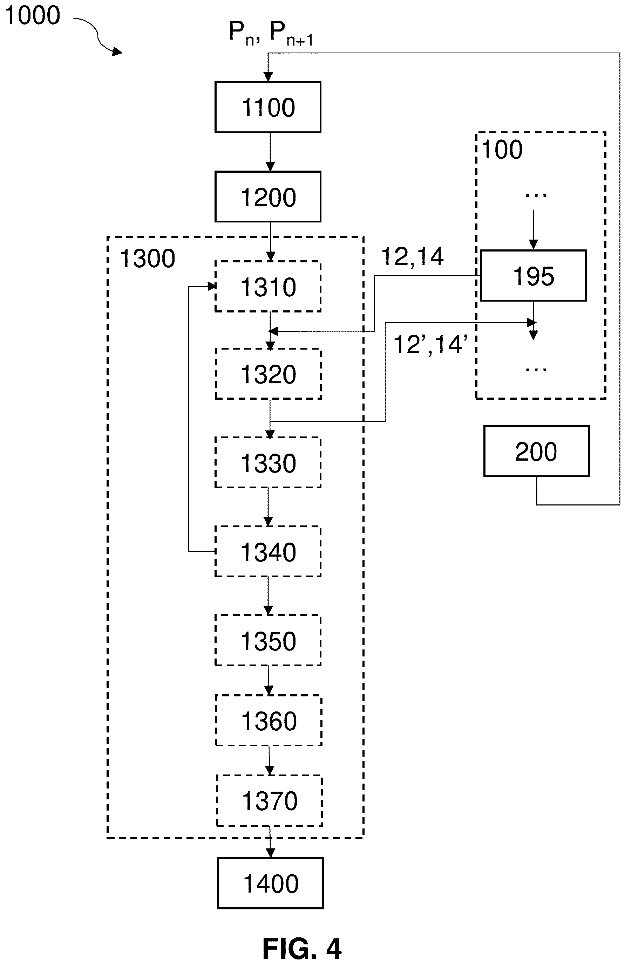

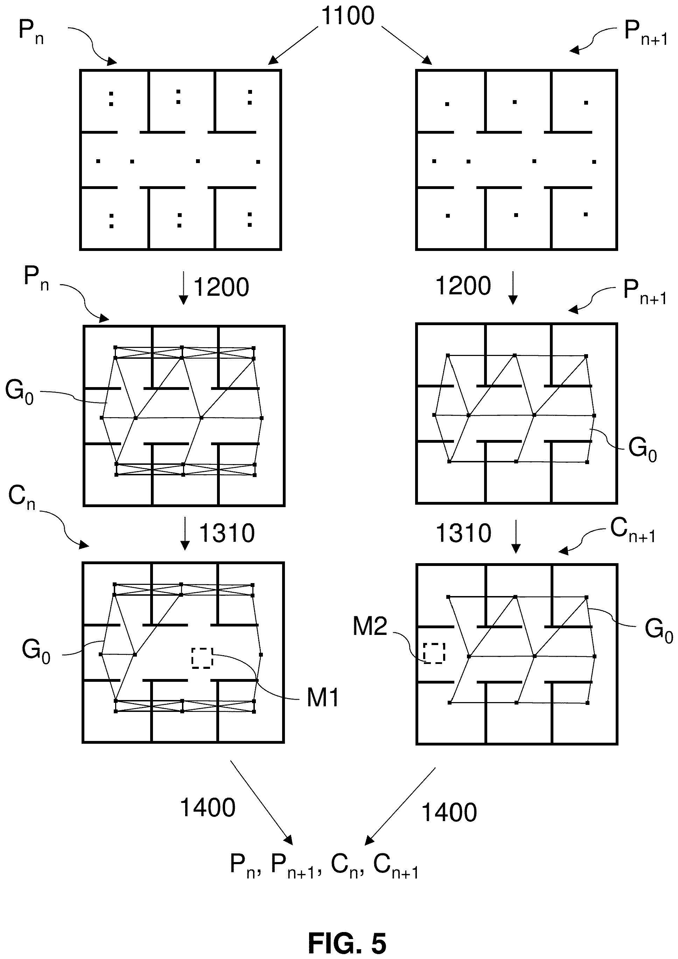

More particularly as described in line with figures 4 and 5, the initial population which comprises the deployment grids $P_n$, $P_{n+1}$ generated by the method 200 according to the invention is loaded 1100. The initial population is then filtered 1200 to keep the deployment grids $P_n$, $P_{n+1}$ of connected objects which fit a predefined technical constraint for obtaining a parent population.

The technical constraint can be a connectivity constraint for the connected objects to ensure the robustness of the network. To that end, a connectivity graph $G_o = (S, E)$ can be generated from the deployment grid $P_n$, $P_{n+1}$, with $S = \{o_1, o_2, ..., o_l\}$, $o_1, o_2, ..., o_l$ being the connected objects and $o_k = (x_k, y_k)$, their coordinates in the deployment grid, and $E = \{(o_k, o_l) | \forall (o_k, o_l) \in S^2, o_k \neq o_l, F_K(o_k, o_l) < \varepsilon\}$. In this example, $F_K$ is representative of a function that allows to determine if two connected objects are linked together in the connectivity graph $G_o$ according to the following equation :

$$F_\kappa(o_k, o_l) = PL_0 + 20 \log \left( \frac{d(o_k, o_l)}{d_0} \right) + \delta \sum_{w \in W} -g_w + X_\sigma$$

where $PL_0$ is the signal attenuation at a standard distance $d_0$, $d(o_k, o_l)$ and $W$ are respectively the Euclidean distance and all the physical obstacles between the two connected objects $o_k$ and $o_l$. $X_\sigma$ is a random variable representing the random attenuation of the signal and $\delta$ is the scale of the grid in meters per cell. The connectivity of the graph $\kappa(G_o)$ is the minimum number of links in the connectivity graph to be removed so that it separates into two sub-graphs. The k-connectivity constraint is therefore respected if $\kappa(G_o) > k$.

Thus, the parent population comprises all the deployment grids of the initial population that fit with the technical constraint. Then, a step of applying 1300 an evolutionary algorithm based on the parent population is carried out to generate 1400 a population of optimized deployment solutions $P_n$, $P_{n+1}$, $C_n$, $C_{n+1}$.

In a preferred embodiment of the computer-implemented method 1000 according to the invention, the step of applying 1300 an evolutionary algorithm further comprises randomly selecting 1310 a deployment grid $P_n$, $P_{n+1}$ from the parent population and generating 1320 a child deployment solution $C_n$, $C_{n+1}$.

The child deployment solution $C_n$, $C_{n+1}$ comprises the selected deployment grid $P_n$, $P_{n+1}$ with at least one mutation M1, M2, the mutation being selected between: a random addition of a connected object in a free space of the one or more zone(s), a random removal of a connected object in a free space of the one or more zone(s) and/or a random displacement of a connected object in a free space of the one or more zone(s).

As shown in figure 5, two mutations M1, M2 are carried out respectively on the deployment grids $P_n$, $P_{n+1}$. The two mutations M1, M2 are a random removal of a connected object in a free space. The connectivity graph $G_0$ corresponding to the one of the child deployment solution is then modified and if the child deployment solution fits the technical constraint, then the child deployment solution is added 1330 to the parent population.

In an embodiment of the step of generating 1320 a child deployment solution, the random addition of a connected object and/or the random displacement of a connected object may be implemented on the weighted deployment multigraph or on the skeleton of the binary grid. More particularly, the step of generating 1320 a child deployment solution may be configured to load the weighted deployment multigraph 14 or the skeletonized binary grid 12, and to carry out the random addition or displacement of the connected object on a weighted link. The mutated weighted deployment multigraph 14' or the mutated skeletonized binary grid 12' is then processed by the method 200 for generating an initial population of deployment grids according to the invention before the method for generating 1000 a population of N optimized deployment solutions of connected objects is carried out.

In the preferred embodiment, when the child deployment solution does not fit the technical constraint, the deployment binary cells that does not fit the technical constraint are removed.

By way of illustrative example, if the technical constraint is a connectivity constraint which implies that all connected objects need to be connected to at least two other connected objects, then, the child deployment solution $C_n$, $C_{n+1}$ shown in figure 5 are added 1330 whereas if all the connected objects of connectivity constraint which implies that all connected objects need to be connected to at least three other connected objects, then the child deployment solution $C_n$, $C_{n+1}$ are added 1330.

In the preferred embodiment, the step of applying 1300 an evolutionary algorithm comprises a step of randomly selecting 1340 another deployment grid from the parent population and iterate the steps of selecting 1310, generating 1320 and adding 1330 described previously, to obtain a new population which comprises the parent population and the child deployment solutions.

By way of examples, the steps of selecting 1310, generating 1320 and adding 1330 can be iterated until the new population reaches a predefined size.

Once the new population has been obtained, the preferred embodiment comprises a step of ranking 1350 all the deployment solutions of the new population based on a score, said score being calculated from at least one objective function.

By way of illustrative and non-limiting examples, the objective function includes at least: a coverage rate of the binary grid and/or a signal quality.

To optimize the deployment of connected objects, the objective function can be defined as being the sum of the coverage of the connected objects so that $F_{obj} = \sum_{c_{i,j} \in C} c_{i,j}$.

More particularly, the coverage rate can be related to a radio coverage. The coverage can thus be defined by the following function:

$$c_{i,j} = \begin{cases} \max_{(x,y) \in S} \dfrac{R_o}{\sqrt{(i-x)^2+(j-y)^2} exp\left(\sum_{w \in W} -g_w\right)+R_o} \\ 0 \end{cases}$$

where $c_{i,j}$ is the value of the deployment binary cell at the position $(i,j)$ in $C$ and $W$ is all the physical obstacles between the deployment binary cell $(i,j)$ and the deployment binary cell $(x,y)$ obtained by Bresenham's algorithm.

Other examples of coverage rate can be similarly defined such as a visual coverage, a lighting coverage or a coverage linked to different types of sensors: air quality sensors, moisture sensors or temperature sensors and so on.

In the preferred embodiment of the computer-implemented method 1000 according to the invention, the step of applying 1300 an evolutionary algorithm further comprises a step of reducing 1360 the deployment solutions of the new population by keeping the deployment solutions that fit with a predefined condition. The predefined condition may be configured to keep the "N" best ranked deployment solution, for example the top fifty best ranked deployment solutions.

Indeed, the methods according to the invention aims at optimizing the deployment of connected objects in an environment, to that end it may be possible to determine which of the deployment solution fit with a threshold score. The threshold score may be characterized by a coverage rate, such as a radio coverage rate, above which the related deployment solutions are kept.

In addition, the score calculation may include a cost function to optimize the number of connected objects. The cost function can represent the number of connected objects in a deployment solution or the monetary cost of the deployment for example. The step of reducing 1360 may be configured so that if the cost function of a deployment solution is below the threshold score, said deployment solution is kept.

Thus, to finely tune the optimization of the deployment of connected objects in an environment, a first threshold score may be related to the objective function and a second threshold score may be related to the cost function. The step of reducing 1360 may be configured so that if both objective function and cost function of a deployment solution fit the corresponding threshold score, said deployment solution is kept.

When the score calculation includes an objective function and a cost function to optimize the number of connected objects, the step of ranking 1350 all the deployment solutions of the new population may be realized by the Pareto limit.

In the preferred embodiment of the computer-implemented method 1000 according to the invention, the step of applying 1300 an evolutionary algorithm consists of applying 1370 said evolutionary algorithm on the reduced new population and generating a population of optimized deployment solutions. The optimized deployment solutions are the one that fit with the threshold score.

According to the invention, the connected objects of the computer-implemented method 1000 may present different types of coverage; and/or different connectivity ranges.

**EXAMPLE**

The invention is further described in detail by reference to the following experimental examples. These examples are provided for purposes of illustration only, and are not intended to be limiting unless otherwise specified. Thus, the invention should in no way be construed as being limited to the following examples, but rather, should be construed to encompass any and all variations which become evident as a result of the teaching provided herein.

The following examples therefore, specifically point out the preferred embodiments of the present invention, and are not to be construed as limiting in any way the remainder of the disclosure.

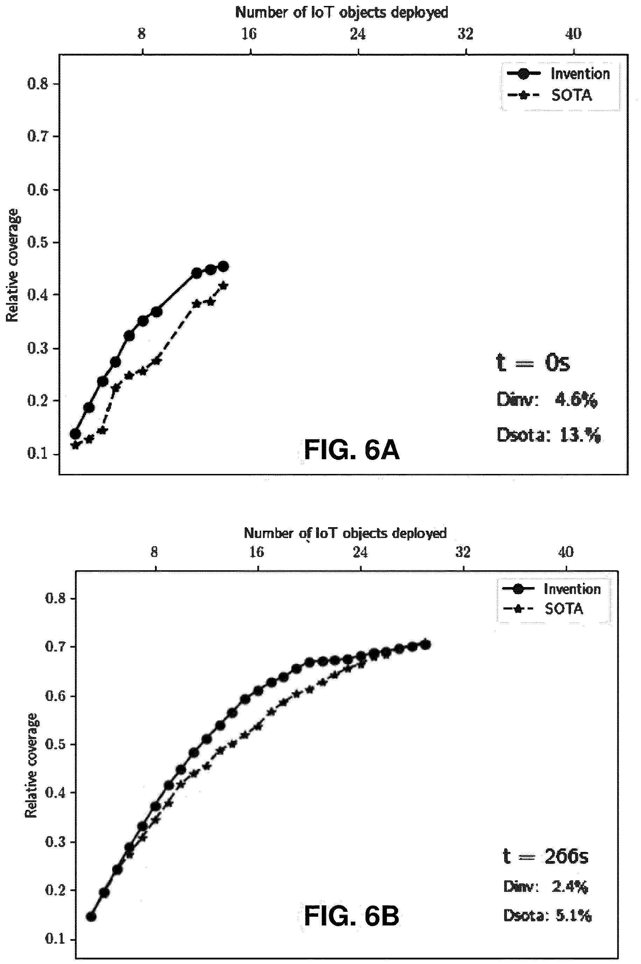

**Example 1 (figures 6A and 6B)**

Input: a SVG format file containing the semantic information of the radio wall penetration ratios is used. The grid size generated from the SVG format file is 200*200. Scale: 1 cell for 0.1m. The coverage range of the connected objects is 21 cells (2m).
The simulation run is 1800s.

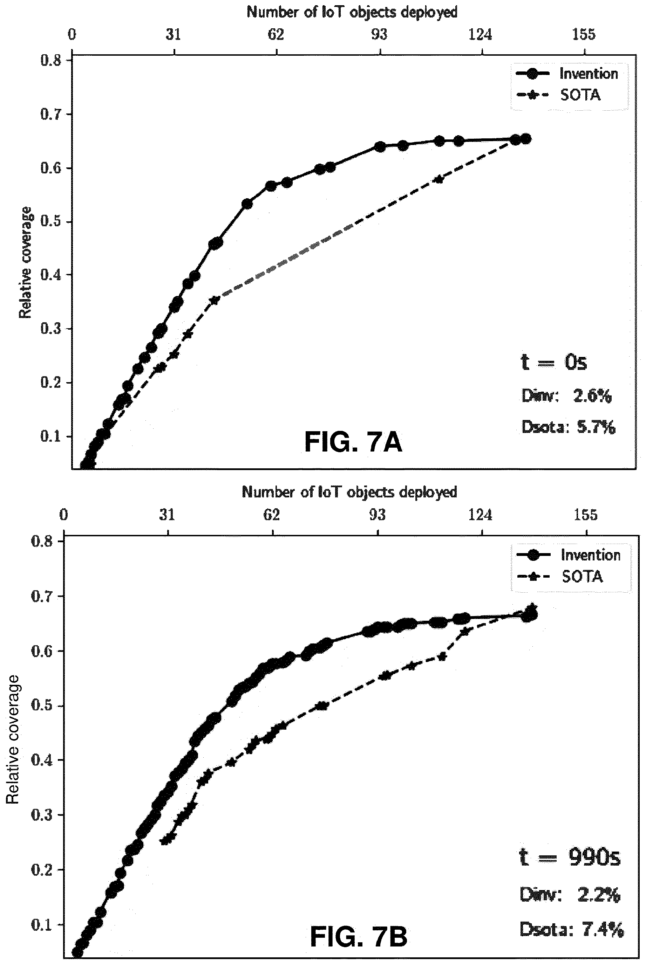

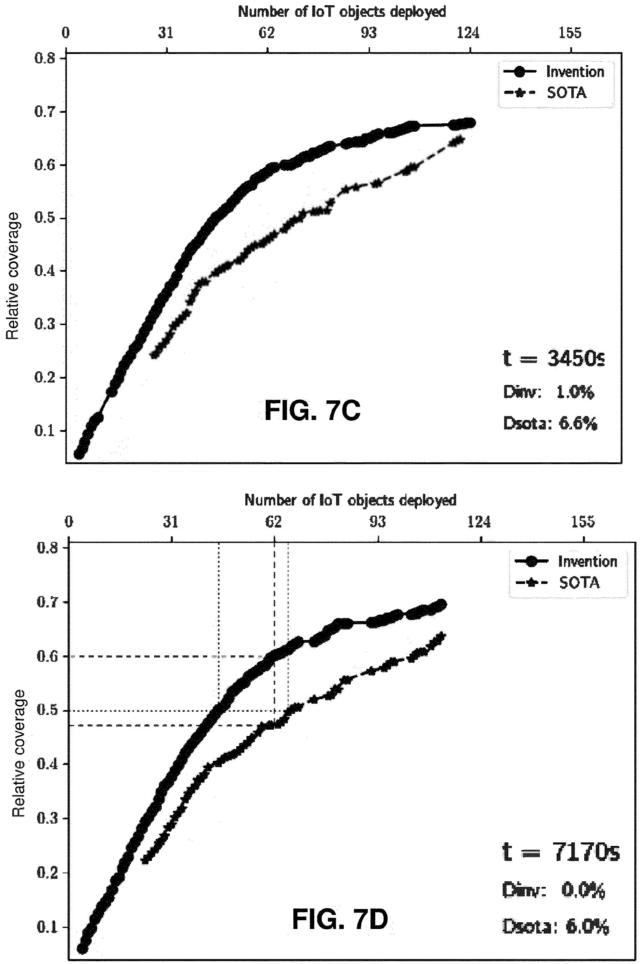

**Example 2 (figures 7A, 7B, 7C and 7D)**

Input: a SVG format file containing the semantic information of the radio wall penetration ratios is used. The grid size generated from the SVG format file is 1000*800. Scale: 1 cell for 0.04m. The coverage range of the connected objects is 51 cells (2m).
The simulation run is 7200s.

Both examples are compared to a referenced method called herein "SOTA" by reference to the NGSA-II (Non-dominated Sorting Genetic Algorithm) and described in Dahmane, W. M., Dollinger, J. F., & Ouchani, S. (2020, October). A BIM-based framework for an Optimal WSN Deployment in Smart Building. In 2020 11 th International Conference on Network of the Future (NoF) (pp. 110-114). IEEE.

For both examples, the objective function is defined by the following equation:

$$F_{obj} = \alpha \sum_{c_{i,j} \in C} c_{i,j} + \beta \sum_{c_{i,j} \in C} \mathbb{1}_{c_{i,j} > 0}$$

With $\alpha$ = 3 and $\beta$ = 1.

The radio coverage is defined as in Dahmane, W. M., Dollinger, J. F, & Ouchani, S. (2020, October). A BIM-based framework for an Optimal WSN Deployment in Smart Building. In 2020 11th International Conference on Network of the Future (NoF) (pp. 110-114). IEEE.

The cost function is based on the number of connected objects used. The step of skeletonizing is based on the medial axis method as mentioned in H. Blum, "A Transformation for Extracting New Descriptors of Shape" in Models for the Perception of Speech and Visual Form (W. Wathen-Dunn, ed.), pp. 362-380, Cambridge: MIT Press, 1967.

The technical constraint is a connectivity constraint. The k-connectivity constraint is respected if $\kappa(G_o) \geq 2$ in example 1 and $\kappa(G_o) \geq 3$ in example 2. As mentioned earlier in the specification, the connectivity communication function that allows to determine if two connected objects are linked is defined according to the $F_K$. As mentioned earlier in the specification, the connectivity communication function that allows to determine if two connected objects are linked is defined according to the $F_K$ function according to the following equation:

$$F_\kappa(o_k, o_l) = PL_0 + 20 \log\left(\frac{d(o_k, o_l)}{d_0}\right) + \delta \sum_{w \in W} -g_w + X_\sigma$$

as described in M. Kacou, V. Guillet, G. Zein, and G. Zaharia, "A multi-wall and multi-frequency home environment path loss characterization and modeling," 04 2018.
Number of individuals in the population: 100.
Number of individuals in the child population: 500.
Probability in the mutation of losing a connected object, adding a connected object, or moving a connected object: 0.35/0.35/0.35.

Probability that the added connected object is on a point of the skeleton or on a weighted link of the multigraph/on any point of the grid: 0.8/0.2.
Threshold of the area of the inscribed rectangle as being representative of the room: 0.65.

**CONCLUSION**

In the results presented in line with figures 6 and 7, the invention is compared to the state of the art (SOTA: NSGA-II) in terms of relative coverage $\frac{F_{obj}}{F_{max}}$ where $F_{max}$ is the number of cells to cover. Given that the function used for the coverage contains an attenuation, the aim is not to obtain 100% relative coverage but rather the best possible relative coverage. The comparison is made at different times to show how the solutions converge, and if the solutions converge towards identical solutions or not. However, the larger and more complex the environment, the slower this convergence is. Moreover, $D_{inv}$ and $D_{sota}$ represent the average of the distances between the solutions at a time "t" and the best solutions found during all the simulations carried out.

Fig 6A shows that the invention allows the initial population of solutions to be already very close to convergence comparing to SOTA. Figure 6B shows that after t = 266s, the invention and SOTA converge to identical solutions. However, depending on the relative coverage (i.e 0.6 relative coverage) and or the number of connected objects desired (i.e 16 connected objects), figure 6B shows that the invention provides solutions with a better relative coverage for a lesser number of connected objects. Indeed, to get a relative coverage of 0.6, SOTA is not able to provide solutions with less than 16 connected objects (i.e approximately 20 connected objects to provide a relative coverage of 0.6).

Fig 7A shows that the invention allows the initial population of solutions to be already very close to convergence, even for complex environments, comparing to SOTA. Figure 7B shows that after t = 990s, the invention and SOTA converge to fewer identical solutions than for the environment presented with figures 6. Figures 7C and 7D show that after respectively t= 3450s and 7170s, the invention provides solutions with a better relative coverage for a lesser number of connected objects, but also provides solutions, when considering a relative coverage greater than 0.6, that SOTA is unable to generate.

Finally, we note that for complex environments, the state of the art does not converge to the same solutions of the one provided by the invention, even in 7200s of calculation, and that the invention finds k-connected solutions for a small number of deployed objects that the state of the art cannot determine.

Thus, **in another aspect**, the invention relates to **one or more computer-readable media storing computer-readable instructions** that when executed by one or more processors cause the one or more processors to perform a method according to the invention. Preferably, the computer-readable media is a tangible non-transitory computer-readable media.

For the purposes of this disclosure, computer-readable media may include any instrumentality or aggregation of instrumentalities that may retain data and/or instructions for a period of time. Computer-readable media may include, for example, without limitation, storage media such as a direct access storage device (e.g. a hard disk drive or floppy disk drive), a sequential access storage device (e.g. a tape disk drive), compact disk, CD-ROM, DVD, RAM, ROM, electrically erasable programmable read-only memory (EEPROM), and/or flash memory; as well as communications media such as wires, optical fibers, microwaves, radio waves, and other electromagnetic and/or optical carriers; and/or any combination of the foregoing.

In particular, any combination of one or more computer-readable media may be used. In the context of this document, a computer-readable medium may be any tangible medium that may contain, or store, a program for use by or in connection with an instruction execution system, apparatus, or device. A computer-readable medium may be, for example, but not limited to, an electronic, magnetic, optical, electromagnetic, infrared or semiconductor system, apparatus or device, or any suitable combination of the foregoing. More specific examples (a non-exhaustive list) of the computer-readable storage medium would include: a hard disk, a random-access memory (RAM).

Computer program code for performing operations for aspects of the present invention may be written in any combination of one or more programming languages, including an object-oriented programming language such as Java, C ++, or similar, the programming language "C" or similar programming languages, a scripting language such as Perl, or similar languages, and / or functional languages such as Meta Language. Program code can run entirely on a user's computer, partly on a user's computer, and partly on a remote computer or entirely on the computer or remote server. In the latter scenario, the remote computer can be connected to a user's computer by any type of network, including a local area network (LAN) or a wide area network (WAN).

The invention can be the subject of numerous variants and applications other than those described above. In particular, unless otherwise indicated, the different structural and functional characteristics of each of the implementations described above should not be considered as combined and / or closely and / or inextricably linked to each other, but on the contrary as simple juxtapositions. In addition, the structural and / or functional characteristics of the various embodiments described above may be the subject in whole or in part of any different juxtaposition or any different combination.

**Claims**

1. A computer-implemented method (100) for generating at least one deployment weighted multigraph (14) of connected objects from at least one plan delineating one or more zone(s) comprising free spaces and physical obstacles, such as walls or doors, with semantic data related to the one or more zone(s), the plan being extracted from a BIM file or a semantic image of normalized plane, the computer-implemented method comprising an image processing with the following steps:

   ◦ loading (110) at least one plan delineating one or more zone(s) including free spaces and physical obstacles, such as walls or doors with semantic data related to the one or more zone(s),
   ◦ transforming (120) the plan into a grid (10) comprising cells related to the one or more zone(s), with semantic data,
   ◦ filtering (130) the grid (10) to generate a binary grid (11) comprising binary cells related to the one or more zone(s),
   ◦ skeletonizing (140), based on the free spaces and the physical obstacles of the one or more zone(s), the binary grid (11) to generate a skeleton of the binary grid, the skeletonized binary grid (12) comprising deployment binary cells, the deployment binary cells being generated from the binary cells of the free spaces,
   ◦ filtering (170) the skeletonized binary grid (12) to select, according to a predefined condition, a part of the deployment binary cells,
   ◦ calculating (190) the distance between each of the selected deployment binary cells, and
   ◦ generating (195) a deployment weighted multigraph (14) of the one more zone(s) comprising the selected deployment binary cells and weighted links, each selected deployment binary cells being representative of a connected object, and each weighted link relative to a first selected deployment binary cell being representative of the calculated distance between the first selected deployment binary cell to a second selected deployment binary cell.

2. The computer-implemented method according to claim 1, wherein the predefined condition of the step of filtering (170) the skeletonized binary grid (12) comprises selecting (180) deployment binary cells related to endpoints and intersection points of the skeletonized binary grid (12), and among the selected deployment binary cells, removing (185) the selected deployment binary cells located at distance inferior to:

   a. a predefined distance from a binary cell related to a physical obstacle, and
   b. a predefined distance between a selected deployment binary cell relative to another deployment binary cell.

3. The computer-implemented method according to claims 1 or 2, wherein the step of skeletonizing (140) comprises a generation (150), from the binary grid (11), of medial axes of the one or more zone(s), the medial axes comprising the deployment binary cells positioned at equal distance from a binary cell related to a physical obstacle.

4. The computer-implemented method according to anyone of claims 1 to 3, wherein the method comprises a step of determining (160) one or more optimized zone(s), from the one or more zone(s), by calculating the maximum inscribed rectangle area and, if the ratio of the maximum inscribed rectangle area to the considered one or more zone(s) area is higher than a predefined threshold, then the step of skeletonizing (140) is based on the free spaces and the physical obstacles of the one or more optimized zone(s).

5. A computer-implemented method (200) for generating an initial population of deployment grids ($P_n$, $P_{n+1}$) of connected objects, the computer-implemented method comprising the following steps:

   ◦ loading, from the deployment weighted multigraph (14) generated by the method according to anyone of claims 1 to 4, a first deployment grid which comprises the deployment binary cell positions, and removing, by contraction, the deployment binary cells which present a distance with another deployment binary cell equal or inferior to a predefined threshold, to obtain a second deployment grid which comprises less deployment binary cells than the first deployment grid,
   ◦ iterating the step of loading and removing, by contraction, the deployment binary cells and increasing, for each iteration, the predefined threshold until the initial population reaches a predefined number of deployment grids

$(P_n, P_{n+1})$.

6. A computer-implemented method for generating (1000) a population of optimized deployment solutions of connected objects, the method comprising the following steps:

   ◦ loading (1100) the initial population generated by the method according to claim 5 and filtering (1200) the initial population by keeping the deployment grids $(P_n, Pn_{+1})$ of connected objects which fit a predefined technical constraint for obtaining a parent population,
   ◦ applying (1300) an evolutionary algorithm from the parent population and generating (1400) a population of optimized deployment solutions $(P_n, P_{n+1}, C_n, C_{n+1})$.

7. The computer-implemented method according to claim 6, wherein the step of applying (1300) an evolutionary algorithm further comprises:

   ◦ randomly selecting (1310) a deployment grid $(P_n)$ from the parent population, and generating (1320) a child deployment solution, the child deployment solution comprising the selected deployment grid with at least one mutation $(C_n)$, the mutation being selected between: a random addition of a connected object in a free space of the one or more zone(s), a random removal of a connected object in a free space of the one or more zone(s) and/or a random displacement of a connected object in a free space of the one or more zone(s),
   ◦ if the child deployment solution fits the technical constraint, then add (1330) the child deployment solution to the parent population,
   ◦ randomly selecting (1340) another deployment grid $(P_{n+1})$ from the parent population and iterate the steps of selecting, generating and adding, to obtain a new population which comprises the parent population and the child deployment solutions,
   ◦ ranking (1350) all the deployment solutions of the new population based on a score calculated from at least one objective function,
   ◦ reducing (1360) the deployment solutions of the new population by keeping the deployment solutions that fit with a predefined condition,
   ◦ applying (1370) the evolutionary algorithm on the reduced new population and generating a population of optimized deployment solutions.

8. The computer-implemented method according to claim 7, wherein the score calculation includes a cost function to optimize the number of connected objects.

9. The computer-implemented method according to claim 8, wherein the ranking of all the deployment solutions of the new population is realized by the Pareto limit.

10. The computer-implemented method according to anyone of claims 7 to 9, wherein the step of generating (1320) a child deployment solution with the random addition of a connected object and/or the random displacement of a connected object is implemented on the skeleton of the skeletonized binary grid (12) or on the deployment weighted multigraph (14).

11. The computer-implemented method according to anyone of claims 7 to 10, wherein the objective function includes at least: a coverage rate of the binary grid and/or a signal quality.

12. The computer-implemented method according to anyone of claims 6 to 11, wherein the connected objects present:

   ◦ different types of coverage; and/or
   ◦ different connectivity ranges.

13. A tangible non-transitory computer-readable media storing computer-readable instructions that when executed by one or more processors cause the one or more processors to perform a method according to anyone of claims 1 to 4, 5 and/or 6 to 12.

100

```
┌─────────┐
│   110   │
└─────────┘
     │
     ▼
┌─────────┐
│   120   │
└─────────┘
     │
     ▼
┌─────────┐
│   130   │
└─────────┘
     │
     ▼
┌─────────┐
│   140   │
└─────────┘
     │
     ▼
┌ ─ ─ ─ ─ ┐
    150
└ ─ ─ ─ ─ ┘
     │
     ▼
┌ ─ ─ ─ ─ ┐
    160
└ ─ ─ ─ ─ ┘
     │
     ▼
┌─────────┐
│   170   │
└─────────┘
     │
     ▼
┌ ─ ─ ─ ─ ┐
    180
└ ─ ─ ─ ─ ┘
     │
     ▼
┌ ─ ─ ─ ─ ┐
    185
└ ─ ─ ─ ─ ┘
     │
     ▼
┌─────────┐
│   190   │
└─────────┘
     │
     ▼
┌─────────┐
│   195   │
└─────────┘
```

**FIG. 1**

110

10

120 / 130

11

140

12

170

13

190 / 195

14

200

$P_{n+1}$

$P_n$

**FIG. 2**

14

**FIG. 3A**

14

**FIG. 3B**

1000

$P_n, P_{n+1}$

1100

1200

1300

1310

1320

1330

1340

1350

1360

1370

1400

12,14

12',14'

100

...

195

...

200

**FIG. 4**

**FIG. 5**

FIG. 6A

FIG. 6B

FIG. 7A

FIG. 7B

FIG. 7C

t = 3450s

Dinv: 1.0%

Dsota: 6.6%

FIG. 7D

t = 7170s

Dinv: 0.0%

Dsota: 6.0%

Europäisches
Patentamt

European
Patent Office

Office européen
des brevets

**DECLARATION**

Application Number

which under Rule 63 of the European Patent Convention
shall be considered, for the purposes of subsequent
proceedings, as the European search report

EP 22 30 7064

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | INV.<br>H04W16/18 |

Under Rule 62a EPC, the responsible examiner considers that the claims as filed do not comply with Rule 43(2) EPC. The applicant was invited to indicate, within a period of two months, the claims complying with Rule 43(2) EPC on the basis of which the search is to be carried out. The applicant has however failed to provide such an indication in due time. With the claims 1, 5 and 6 being independent, the requirements of Rule 43(2) EPC are not satisfied in that the set of independent method claims does not fall under any of the exceptions of the Rule. The methods are neither interrelated products such as plug and socket, they are not different uses of a product nor are they alternative solutions to a particular problem, since they have different and not-corresponding outcomes.
As a sidenote it has to be noted that in addition, it appears that also the requirement of unity (Art. 82 EPC) is not satisfied between the claims, as there is no identifiable common subject-matter nor common problem solved or corresponding special technical features between claims 1 and 5, between claims 1 and 6 and between claims 5 and 6.
The search attempt is thus carried out on the basis of the first claim in each category, namely claim 1-4 and 13. For these claims the following observations are made:
The responsible examiner considers, according to Rule 63 EPC that the current application fails to such an extent to comply with the EPC that it is impossible to carry out a meaningful search regarding
-/--

| Place of search | Date | Examiner |
|---|---|---|
| The Hague | 6 September 2023 | Weinmiller, Jost |

EPO FORM 1504 (P04F37)

| | | | |
|---|---|---|---|
| Europäisches Patentamt<br>European Patent Office<br>Office européen des brevets | **DECLARATION** | | **Application Number** |
| | which under Rule 63 of the European Patent Convention shall be considered, for the purposes of subsequent proceedings, as the European search report | | **EP 22 30 7064** |

| The Search Division considers that the present application, does not comply with the provisions of the EPC to such an extent that it is not possible to carry out a meaningful search into the state of the art on the basis of all claims | **CLASSIFICATION OF THE APPLICATION  (IPC)** |
|---|---|
| Reason:<br><br>    the state of the art on the basis of all of the subject-matter claimed in the claims 1-4 and 13.  The applicant was invited to file, within a period of two months, a statement indicating the subject-matter to be searched. The statement was not filed in due time, and thus the deficiency is not overcome. The European Patent Office thus issues a reasoned declaration stating that the European patent application fails to such an extent to comply with this Convention that it is impossible to carry out a meaningful search regarding the state of the art on the basis of the subject-matter claimed in claims 1-4, 13. The reasoned declaration is be considered, for the purposes of subsequent proceedings, as the European search report.<br><br>    The applicant's attention is drawn to the fact that a search may be carried out during examination following a declaration of no search under Rule 63 EPC, should the problems which led to the declaration being issued be overcome (see EPC Guideline C-IV, 7.2). | |

| Place of search | Date | Examiner |
|---|---|---|
| The Hague | 6 September 2023 | Weinmiller, Jost |

EPO FORM 1504 (P04F37)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. ELEDLEBI et al.** Voronoi-based indoor deployment of mobile sensors network with obstacles. *2018 IEEE 3rd International Workshops on Foundations and Applications of Self\* Systems*
- **Y. ZOU.** Sensor deployment and target localization based on virtual forces. *IEEE INFOCOM 2003. Twenty-second Annual Joint Conference of the IEEE Computer and Communications*
- **I. KHOUFI et al.** A Simple Method for the Deployment of Wireless Sensors to Ensure Full Coverage of an Irregular Area with Obstacles. *MSWIM: International Conference on Modeling, Analysis and Simulation of Wireless and Mobile Systems, (Montreal, Canada),* September 2014
- **H. ZHOU et al.** Indoor positioning research based on wireless sensor network topology optimization. *2019 Chinese Automation Congress,* 2019, 3951-3957

- A BIM-based framework for an Optimal WSN Deployment in Smart Building. **DAHMANE, W. M. ; DOLLINGER, J. F. ; OUCHANI, S.** 2020 11 th International Conference on Network of the Future (NoF). IEEE, October 2020, 110-114
- A BIM-based framework for an Optimal WSN Deployment in Smart Building. **DAHMANE, W. M. ; DOLLINGER, J. F ; OUCHANI, S.** 2020 11th International Conference on Network of the Future (NoF). IEEE, October 2020, 110-114
- A Transformation for Extracting New Descriptors of Shape. **H. BLUM.** Models for the Perception of Speech and Visual Form. MIT Press, 1967, 362-380
- **M. KACOU ; V. GUILLET ; G. ZEIN ; G. ZAHARIA.** *A multi-wall and multi-frequency home environment path loss characterization and modeling,* April 2018